# EUROPEAN PATENT SPECIFICATION

(11) **EP 2 389 830 B1**
(45) Date of publication and mention of the grant of the patent: **06.11.2013**
(21) Application number: 10164327.8
(22) Date of filing: 28.05.2010
(51) Int. Cl.: A45C 11/00, H04B 1/38, A45F 5/02

(54) **Holster for a portable communication device**
Halter für tragbare Kommunikationsvorrichtung
Étui pour dispositif de communication portable

(43) Date of publication of application: 30.11.2011
(73) Proprietor: BlackBerry Limited, Waterloo, ON N2L 3W8 (CA)
(72) Inventor: Sa, Claudio Gill, East Canada Waterloo, Ontario N2K 0A2 (CA)
(74) Representative: Patel, Binesh

(56) References cited:
- US-A1- 2004 166 910
- US-B1- 6 170 651
- US-B1- 6 923 313

## Description

### TECHNICAL FIELD

The present disclosure relates generally to portable devices and in particular to holsters for portable devices.

### BACKGROUND

Portable devices have become common. Users often carry one or more portable devices, including for example cell phones, media players and other portable communication, media and/or entertainment devices. The portable devices generally have a display screen and keyboard or keypad on a front surface of the portable devices. Portable devices do not require the keypads or keyboards on the front surface, which may be comprised substantially of a display screen. The display screen, as well as the front surface more generally, can become dirty from use, especially if the display screen is a touch screen.

Often users use a holster to carry the portable devices around. The holster may include a belt clip for carrying the portable device on a user's clothing. The holster may include an interior lining for preventing scratches on the surface of the portable devices. Other holsters can include soft cloth pouches or solid pouches or similar pockets.

Although holsters may have soft linings, or be fabricated from a similar cloth material, they do not provide a way to dispense a cleaning or disinfecting agent on a surface of the portable device.

US 6,923,313 B1 discloses an eyeglasses polisher/holder device for cleaning one's eyeglasses by simply sliding the eyeglasses in and out of the container. The eyeglasses polisher/holder device includes a container having an opening therein and also having a storage compartment disposed therein for storing a user's eyeglasses; and also includes a cover assembly including a cover member for removably closing the opening into the container; and further includes an eyeglass cleaner being disposed in the container for cleaning the user's eyeglasses.

### SUMMARY

There is provided a holster for a portable device. The holster comprises a housing comprising a support member comprising an interior surface; and a retaining means for retaining said portable device adjacent at least a portion of said interior surface. The housing further comprises a dispensing mechanism coupled to the housing comprising a reservoir defining an interior volume for holding a substance to be dispensed; and an applicator partially located within the reservoir for dispensing a portion of said substance from the interior volume of the reservoir to a portion of a surface of said portable device as said portable device is placed into, or removed from, the holster.

There is further provided a holster for a portable device. The holster comprises a housing comprising a support member comprising an interior surface; a retaining means for retaining said portable device adjacent at least a portion of said interior surface; and an attachment mechanism for coupling a dispensing mechanism, for dispensing a substance onto at least a portion of a surface of said portable device, to the housing.

### BRIEF DESCRIPTION OF THE DRAWINGS

A holster is described with reference to the drawings, in which:
Figure 1A is a side view of an illustrative holster with a dispensing mechanism;
Figure 1B is a front view of the holster of Figure 1 B;
Figure 2A is a side view of a further illustrative holster with a dispensing mechanism;
Figure 2B is a front view of the holster of Figure 2B;
Figure 3A is a side view of a yet further illustrative holster with a dispensing mechanism;
Figure 3B is a front view of the holster of Figure 2B;
Figure 4A is an isometric view of an illustrative cleaning mechanism;
Figure 4B is an isometric view of a further illustrative cleaning mechanism; and
Figure 4C is an isometric view of a yet further illustrative cleaning mechanism.

### DETAILED DESCRIPTION

Previous holsters for portable electronic devices have not included a means for dispensing a liquid or other substance onto a surface of the device. Various embodiments of holsters are described herein that include a dispensing means for dispensing a substance onto a surface of the device or portion thereof. As described further with reference to the various illustrative embodiments, the dispensing mechanism includes a reservoir defining an interior volume for holding the substance to be dispensed and an applicator for dispensing a portion of said substance from the interior volume of the reservoir to a portion of the surface of said device.

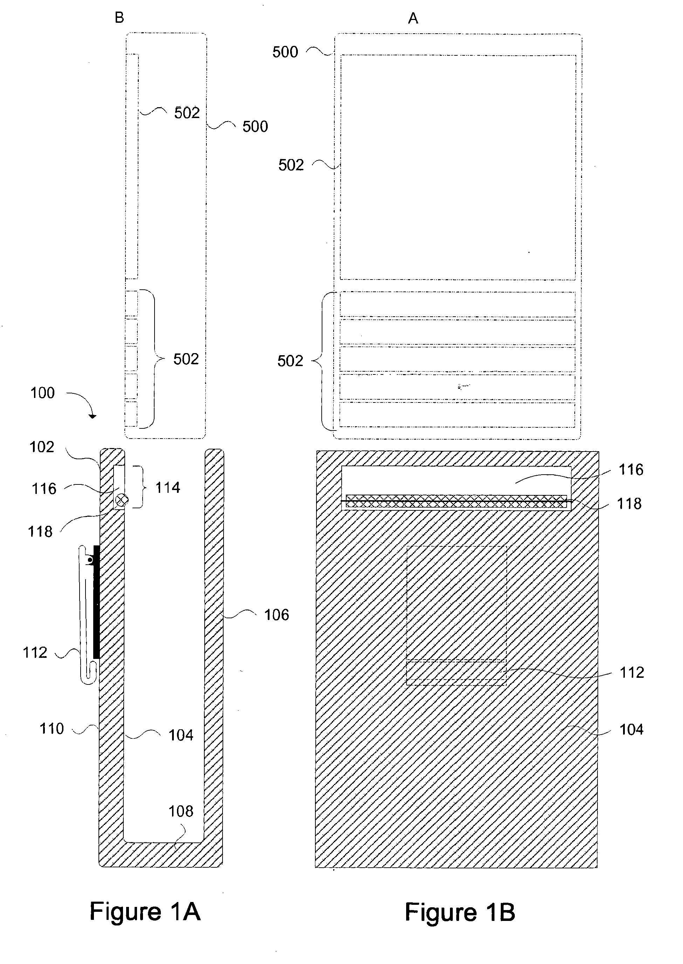

Referring to Figures 1A and 1B there is depicted an illustrative holster with a dispensing mechanism. The holster 100 can hold a portable device 500. The portable device 500 includes a screen 502 and possibly a keyboard or keypad 504. Although the screen 502 of the portable device 500 is depicted as covering only a portion of the portable device 500, it is understood that the screen 502 may comprise a substantial portion of the portable device 500. Furthermore, although the portable device 500 is depicted as having generally the proportions of a smart phone, it may be other portable devices including laptops, tablets, personal entertainment devices or other portable devices with a screen.

The holster 100 comprises a housing having a support member 102 that has an interior surface 104 and an exterior surface 110 and a retaining means for retaining the device 500 within the holster 100. The retaining means may include a retaining member 106 that comprises a member substantially parallel to the support member 102 and coupled to the support member 102 by a connecting web 108. The support member 102, connecting web 108 and retaining member 106 may define a space or pocket that the device may be retained in. It will be appreciated that other retaining means may be used, for example frictional fit, clips, etc. A belt clip 112 may be attached to the exterior surface 110 of the support member 102 for attaching the holster 100 to a belt or other article of clothing.

The interior surface 104 includes a dispensing mechanism 114 for dispensing a substance onto a surface of the portable device 500 when it is inserted and or removed from the holster 100. The dispensing mechanism 115 may comprise a reservoir 116 that defines an internal volume for holding the substance to be dispensed. The substance may comprise, for example, a liquid or gel. Furthermore the liquid or gel may be a cleaning agent or a disinfecting agent. The dispensing mechanism 115 also includes an applicator 118 for dispensing the liquid onto the surface of the portable device 500. The applicator 118 may comprise a roller as depicted in Figures 1A, 1B that includes a portion of the roller within the reservoir 116. As the portable device is placed into, or removed from, the holster 100, the surface of the portable device engages with the applicator 118 causing it to rotate and dispense the substance from the reservoir onto the surface of the portable device. As can be seen in Figure 1B, the cleaning mechanism 114 may be arranged generally horizontally within the holster so that a large portion of the surface of the portable device is contacted by the dispensing mechanism 114 when the phone is inserted/removed from the holster 100. Although the arrangement of the dispensing mechanism 114 is described as being generally horizontal, it is understood that other arrangements are possible that still allow the dispensing mechanism to contact a large portion of the surface of the portable device 500 when it is inserted into the holster 100.

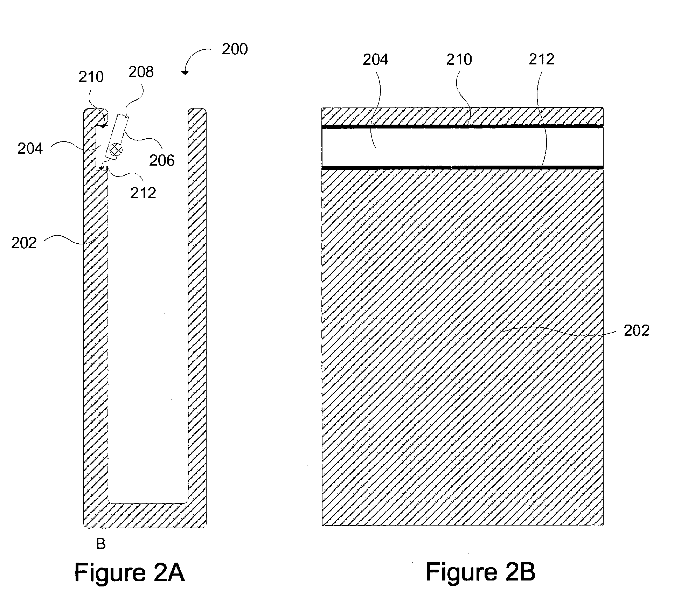

Figures 2A and 2B depict a further illustrative embodiment of a holster. The holster 200 is similar to the holster 100 described above; however, the holster 200 does not include a belt clip. The holster 200 without the belt clip may be suited for holding larger portable device 500. Furthermore, the holster 200 includes a recess 204 in the interior surface of the support member 202. The recess 204 is sized to receive a dispensing mechanism 206. The dispensing mechanism 206 is similar to the dispensing mechanism 114 described above; however a housing of the dispensing mechanism 206 includes a detent 208. The detent 208 may co-operate with a corresponding bump 210 on a surface of the recess 204 in the interior surface of the support member 202. The detent 208 and bump 210 co-operate in order to releasably secure the dispensing mechanism 206 in the recess 204. It will be appreciated that the detent 208 may be located on the surface of the recess and the bump 210 on the corresponding surface of the dispensing mechanism 206. The detent 208 and bump 210 co-operate in order to allow the dispensing mechanism 206 to be removed and replaced as when required. In addition to the detent 208 and bump 210 the holster may also include member 212 on the opposing surface of the recess 204.

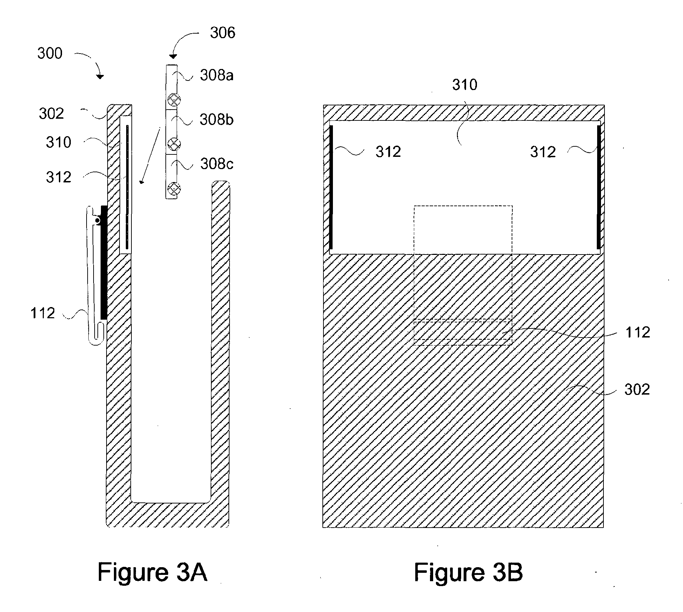

Figures 3A and 3B is a side view of a yet further illustrative holster with a dispensing mechanism. The holster 300 is similar to the holster 100 described above. It includes a support member 302 that includes a recess 310 for receiving a dispensing mechanism 306. The recess 310 includes bumps 312 on two opposing sides or surfaces of the recess 310. The bumps 312 co-operate with corresponding detents (not shown) in the dispensing mechanism 306. The bumps 312 releasably secure the dispensing mechanism 306 in the recess 310. In contrast to the detents 208 and bumps 210 of Figures 2A and 2B, which are arranged along a top and bottom surface of the recess 204, the bumps 312 are arranged on opposing horizontal surfaces of the recess 310.

As depicted in Figure 3A, the dispensing mechanism 306 may include a plurality of reservoir/applicators 308a, 308b, 308c. Alternatively to a dispensing mechanism 306 with multiple reservoir/applicators as depicted, it is possible to have multiple dispensing mechanisms, each with only a single reservoir/applicator. The multiple reservoirs/applicators 308a, 308b, 308c of the dispensing mechanism 306 may dispense the same or different substances, such as a cleaning liquid as well as a disinfecting liquid.

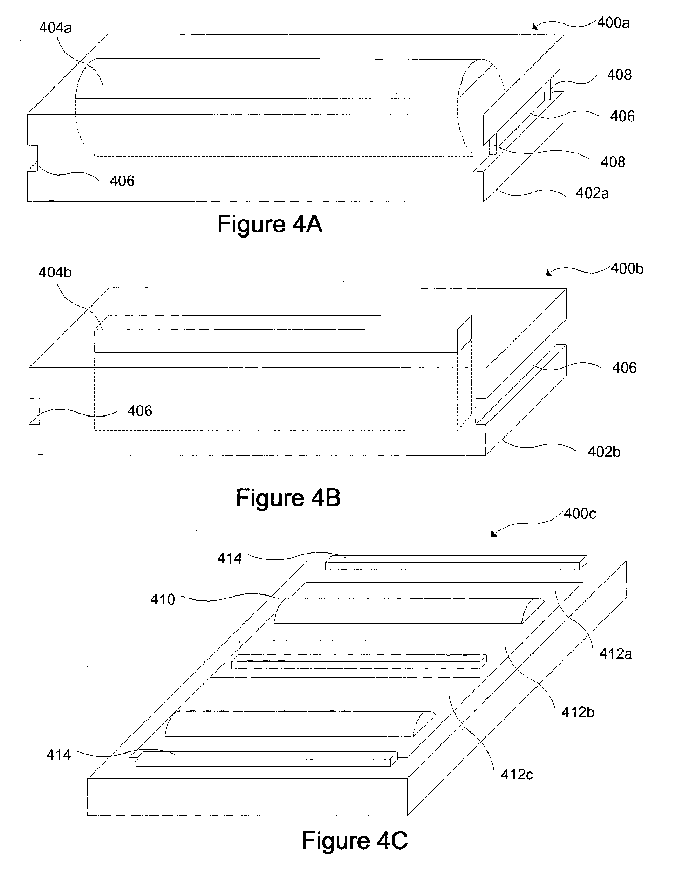

Figure 4A is an isometric view of an illustrative dispensing mechanism. The dispensing mechanism 400a comprises a hosing 402a with the reservoir. An applicator 404a is depicted as a roller. The roller is partially located within the reservoir of the housing 402a. The housing 402a depicted in Figure 4A includes two grooves 406 running down opposite sides of the housing. The two grooves 406 may co-operate with a corresponding track on a holster. The track (not shown) and the grooves 406 co-operate to allow the dispensing mechanism 400a to slide in the holster. The grooves 406 may include bumps 408, or detents, to releasably secure the dispensing mechanism 400a in the holster.

Figure 4B is an isometric view of a further illustrative dispensing mechanism. The dispensing mechanism 400b is similar to the dispensing mechanism 400a described above. It includes a housing 402b with grooves 406 for releasably securing the dispensing mechanism 400b to the holster. The grooves 406 of the dispensing mechanism 400b do not include bumps 408 as described with reference to Figure 4B. The grooves 406 may be sized to frictionally engage with corresponding tracks on the holster. The dispensing mechanism 400b includes an actuator 404b for dispensing a liquid from the reservoir. The actuator 404b is depicted as a permeable sponge material.

Figure 4C is an isometric view of a yet further illustrative dispensing mechanism. The dispensing mechanism 400c comprises a housing 410 holding a plurality reservoir/actuators 412a, 412b, 412c. The reservoir/actuators 412a, 412b, 412c are arranged within the housing vertically such that a portable device that is inserted into a holster holding the dispensing mechanism 400c will pass each reservoir/applicator 412a, 412b, 412c. The housing 410 may further include one or more drying heads 414 located at the top bottom of the dispensing mechanism 400c. The drying heads 414 may be made from a cloth or similar material. The drying heads 414 may dry the surface of the portable device 500 after it passes the applicators.

It will be appreciated that although various embodiments of a holster with a dispensing mechanism have been described in detail, further modifications and changes may be made to the holster without departing from the scope of protection of the appended claims. Furthermore, various elements of the holster have been described with respect to particular embodiments, it will be appreciated that the elements may be incorporated into other embodiments of the holster. Furtherstill, although the holster and cleaning mechanism are described together, it will be appreciated that they may be individual and separate components.

## Claims

1. A holster (100) for a portable device (500), the holster comprising:
a housing comprising
a support member (102) comprising an interior surface (104); and
a retaining means (106) for retaining said portable device adjacent at least a portion of said interior surface; and
a dispensing mechanism (114) coupled to the housing comprising:
a reservoir (116) defining an interior volume for holding a substance to be dispensed; and
an applicator (118) partially located within the reservoir for dispensing a portion of said substance from the interior volume of the reservoir to a portion of a surface of said portable device as said portable device is placed into, or removed from, the holster.

2. The holster as claimed in claim 1, wherein the dispensing mechanism comprises:
a plurality of reservoirs, each defining a respective interior volume for holding a respective substance; and
a corresponding plurality of applicators, each for dispensing a portion of said respective substance from the respective interior volume of the reservoir.

3. The holster as claimed in any one of claims 1 or 2, further comprising:
a plurality of dispensing mechanisms, for holding and dispensing a respective substance to said portion of said portable device.

4. The holster as claimed in any one of claims 1 - 3, wherein the dispensing mechanism further comprises a housing enclosing said reservoir and a portion of the applicator, the dispensing mechanism housing comprising an attachment means for releasably coupling the dispensing mechanism to the housing of the holster.

5. The holster as claimed in claim 4, wherein the attachment means comprises a left groove or track and a right groove or track extending down a respective side of the hosing of the dispensing mechanism, the grooves or tracks co-operating with corresponding tracks or grooves on the housing of the holster.

6. The holster as claimed in claim 5, wherein each groove or track extending down each side of the dispensing mechanism comprises a bump or detent for co-operating with a corresponding detent or bump on the respective track or groove of the housing of the holster.

7. The holster as claimed in claim 4, wherein the interior surface of the support member comprises a recessed portion sized to receive the housing of the dispensing mechanism, and wherein the attachment means comprises a bump or detent on at least a side of the housing for co-operatively engaging a corresponding detent or bump on at least a side surface of said recessed portion.

8. The holster as claimed in any one of claims 4 - 7, wherein the dispensing mechanism housing comprises one or more drying heads arranged substantially parallel to the applicator for absorbing at least a portion of the substance dispensed on to said surface of said portable device.

9. The holster as claimed in any one of claims 1 - 8, wherein the interior surface of the support member comprises a recessed portion sized to receive the dispensing mechanism with a friction fit.

10. The holster as claimed in any one of claims 1 - 9, wherein the applicator comprises at least one of:
a roller; or
a stationary absorbent material.

11. The holster as claimed in any one of claims 1 - 10, wherein said substance comprises a liquid or gel.

12. The holster as claimed in any one of claims 1 - 11, wherein said substance is capable of cleaning, disinfecting or both, a surface of said portable device.

## Patentansprüche

1. Ein Holster bzw. eine Halteeinrichtung (100) für eine tragbare Vorrichtung (500), wobei das Holster aufweist:
ein Gehäuse, das aufweist
ein Stützelement (102), das eine Innenfläche (104) aufweist; und
ein Haltemittel (106) zum Halten der tragbaren Vorrichtung angrenzend an zumindest einen Teil der Innenfläche; und
einen Abgabemechanismus (114), der mit dem Gehäuse gekoppelt ist und aufweist:
einen Behälter bzw. ein Reservoir (116), der/das ein inneres Volumen definiert zur Aufnahme einer abzugebenden Substanz; und
einen Applikator (118), der sich teilweise in dem Behälter befindet, zum Abgeben eines Teils der Substanz aus dem inneren Volumen des Behälters an einen Teil einer Oberfläche der tragbaren Vorrichtung, wenn die tragbare Vorrichtung in das Holster platziert oder daraus entfernt wird.

2. Das Holster gemäß Anspruch 1, wobei der Abgabemechanismus aufweist:
eine Vielzahl von Behältern, die jeweils ein entsprechendes inneres Volumen definieren zur Aufnahme einer jeweiligen Substanz; und
eine entsprechende Vielzahl von Applikatoren, die jeweils vorgesehen sind zur Abgabe eines Teils der jeweiligen Substanz aus dem jeweiligen inneren Volumen des Behälters.

3. Das Holster gemäß einem der Ansprüche 1 oder 2, das weiter aufweist:
eine Vielzahl von Abgabemechanismen zum Aufnehmen und Abgeben einer jeweiligen Substanz an den Teil der tragbaren Vorrichtung.

4. Das Holster gemäß einem der Ansprüche 1 - 3, wobei der Abgabemechanismus weiter ein Gehäuse aufweist, das den Behälter und einen Teil des Applikators umgibt, wobei das Gehäuse des Abgabemechanismus ein Befestigungsmittel zum lösbaren Koppeln des Abgabemechanismus an das Gehäuse des Holsters aufweist.

5. Das Holster gemäß Anspruch 4, wobei das Befestigungsmittel eine linke Vertiefung oder Spur und eine rechte Vertiefung oder Spur aufweist, die sich entlang einer jeweiligen Seite des Gehäuses des Abgabemechanismus erstrecken, wobei die Vertiefungen oder Spuren mit entsprechenden Spuren oder Vertiefungen an dem Gehäuse des Holsters zusammenwirken.

6. Das Holster gemäß Anspruch 5, wobei jede Vertiefung oder Bahn, die sich entlang jeder Seite des Abgabemechanismus erstreckt, einen Vorsprung oder eine Raste aufweist zum Zusammenwirken mit einer entsprechenden Raste oder einem Vorsprung auf der jeweiligen Spur oder Vertiefung des Gehäuses des Holsters.

7. Das Holster gemäß Anspruch 4, wobei die Innenfläche des Stützelements einen ausgesparten Teil aufweist, der eine Größe hat, um das Gehäuse des Abgabemechanismus aufzunehmen, und wobei das Befestigungsmittel einen Vorsprung oder eine Raste an zumindest einer Seite des Gehäuses aufweist zum zusammenwirkenden Eingreifen in bzw. Kontaktieren einer entsprechenden Raste oder eines Vorsprungs auf zumindest einer Seitenfläche des ausgesparten Teils.

8. Das Holster gemäß einem der Ansprüche 4 - 7, wobei das Gehäuse des Abgabemechanismus einen oder mehrere Trocknungs-Kopf/Köpfe aufweist, der/die im Wesentlichen parallel zu dem Applikator angeordnet ist/sind, zum Absorbieren zumindest eines Teils der Substanz, die auf die Oberfläche der tragbaren Vorrichtung abgegeben wird.

9. Das Holster gemäß einem der Ansprüche 1- 8, wobei die Innenfläche des Stützelements einen ausgesparten Teil aufweist, der eine Größe hat, um den Abgabemechanismus reibschlüssig aufzunehmen.

10. Das Holster gemäß einem der Ansprüche 1 - 9, wobei der Applikator zumindest eines aufweist:
eine Rolle; oder
ein stationäres absorbierendes Material.

11. Das Holster gemäß einem der Ansprüche 1 - 10, wobei die Substanz eine Flüssigkeit oder ein Gel aufweist.

12. Das Holster gemäß einem der Ansprüche 1 - 11, wobei die Substanz eine Oberfläche der tragbaren Vorrichtung reinigen, desinfizieren oder beides kann.

## Revendications

1. Etui (100) pour dispositif portable (500), l'étui comprenant :
un logement comprenant
un élément de support (102) comprenant une surface intérieure (104) ; et
un moyen de retenue (106) pour retenir ledit dispositif portable en un point adjacent à au moins une partie de ladite surface intérieure ; et
un mécanisme de distribution (114) accouplé au logement, comprenant :
un réservoir (116) définissant un volume intérieur destiné à contenir une substance à distribuer ; et
un applicateur (118) situé en partie au sein du réservoir pour distribuer une partie de ladite substance depuis le volume intérieur du réservoir jusqu'à une partie d'une surface dudit dispositif portable lorsque ledit dispositif portable est introduit dans l'étui, ou en est extrait.

2. Etui selon la revendication 1, dans lequel le mécanisme de distribution comprend :
une pluralité de réservoirs, chacun définissant un volume intérieur respectif destiné à contenir une substance respective ; et
une pluralité correspondante d'applicateurs, chacun pour distribuer une partie de ladite substance respective depuis le volume intérieur respectif du réservoir.

3. Etui selon l'une quelconque des revendications 1 ou 2, comprenant, en outre :
une pluralité de mécanismes de distribution, destinés à contenir et distribuer une substance respective jusqu'à ladite partie dudit dispositif portable.

4. Etui selon l'une quelconque des revendications 1 à 3, dans lequel le mécanisme de distribution comprend, en outre, un logement enfermant ledit réservoir et une partie de l'applicateur, le logement du mécanisme de distribution comprenant un moyen de fixation pour accoupler, de façon amovible, le mécanisme de distribution au logement de l'étui.

5. Etui selon la revendication 4, dans lequel le moyen de fixation comprend une rainure ou voie gauche et une rainure ou voie droite s'étendant le long d'un côté respectif du logement du mécanisme de distribution, les rainures ou voies coopérant avec des rainures ou voies correspondantes sur le logement de l'étui.

6. Etui selon la revendication 5, dans lequel chaque rainure ou voie s'étendant le long de chaque côté du mécanisme de distribution comprend un bossage ou un cliquet destiné à coopérer avec un bossage ou un cliquet correspondant sur la rainure ou voie respective du logement de l'étui.

7. Etui selon la revendication 4, dans lequel la surface intérieure de l'élément de support comprend une partie évidée dimensionnée pour recevoir le logement du mécanisme de distribution, et dans lequel le moyen de fixation comprend un bossage ou un cliquet sur au moins un côté du logement pour engager, en coopération, un bossage ou un cliquet correspondant sur au moins une surface latérale de ladite partie évidée.

8. Etui selon l'une quelconque des revendications 4 à 7, dans lequel le logement du mécanisme de distribution comprend une ou plusieurs têtes de séchage disposées sensiblement parallèlement à l'applicateur pour absorber au moins une partie de la substance distribuée sur ladite surface dudit dispositif portable.

9. Etui selon l'une quelconque des revendications 1 à 8, dans lequel la surface intérieure de l'élément de support comprend une partie évidée dimensionnée pour recevoir le mécanisme de distribution avec un ajustement serré.

10. Etui selon l'une quelconque des revendications 1 à 9, dans lequel l'applicateur comprend au moins un des éléments parmi les suivants :
une roulette ; ou
un matériau absorbant fixe.

11. Etui selon l'une quelconque des revendications 1 à 10, dans lequel ladite substance comprend un liquide ou un gel.

12. Etui selon l'une quelconque des revendications 1 à 11, dans lequel ladite substance est apte à nettoyer, désinfecter, ou les deux, une surface dudit dispositif portable.
